# EUROPEAN PATENT APPLICATION

(11) **EP 2 874 400 A1**
(43) Date of publication of application: **20.05.2015**
(21) Application number: 13827813.0
(22) Date of filing: 02.08.2013
(51) Int. Cl.: H04N 21/24

(54) **METHOD AND DEVICE FOR PREVENTING INTERRUPTION OF ON-DEMAND SERVICE IN INTERNET PROTOCOL TELEVISION SYSTEM**

(30) Priority: 09.08.2012 CN 201210281753
(71) Applicant: ZTE Corporation, Shenzhen, Guangdong 518057 (CN)
(72) Inventor: DING, Xiangjun, Shenzhen Guangdong 518057 (CN); ZHENG, Xiaohua, Shenzhen Guangdong 518057 (CN); XIA, Hongsheng, Shenzhen Guangdong 518057 (CN); DAI, Chuan, Shenzhen Guangdong 518057 (CN)
(74) Representative: Benson, Christopher
(86) International application number: PCT/CN2013/080727
(87) International publication number: WO 2014/023192

(57) **Abstract**

A method and device for preventing interruption of an on-demand service in an Internet Protocol television (IPTV) system, wherein the method includes: when detecting that a media storage and distribution unit has an Ethernet interface faulted, floating IP address of the faulted Ethernet interface over a normal Ethernet interface; selecting all working-state service data regions occupying the faulted Ethernet interface, and switching media code streams corresponding thereto to the normal Ethernet interface for transmission. When there is an Ethernet interface faulted, the present invention can smoothly switch a service from the Ethernet interface to another Ethernet interface, thus continuously performing an on-demand service without interruption.

## Description

### Technical Field

The present invention relates to the field of communication technologies, and more particularly, to a method and device for preventing interruption of on-demand service in an Internet Protocol television system.

### Background of the Invention

Service on demand is a basic service form of the IPTV (Internet Protocol Television) service, wherein the user selects audio and video streams to play as needed, and it is a point-to-point playing. It hands the playing content choice over to the users, which greatly meets the users' individual needs, and is a new service form completely different from the traditional television.

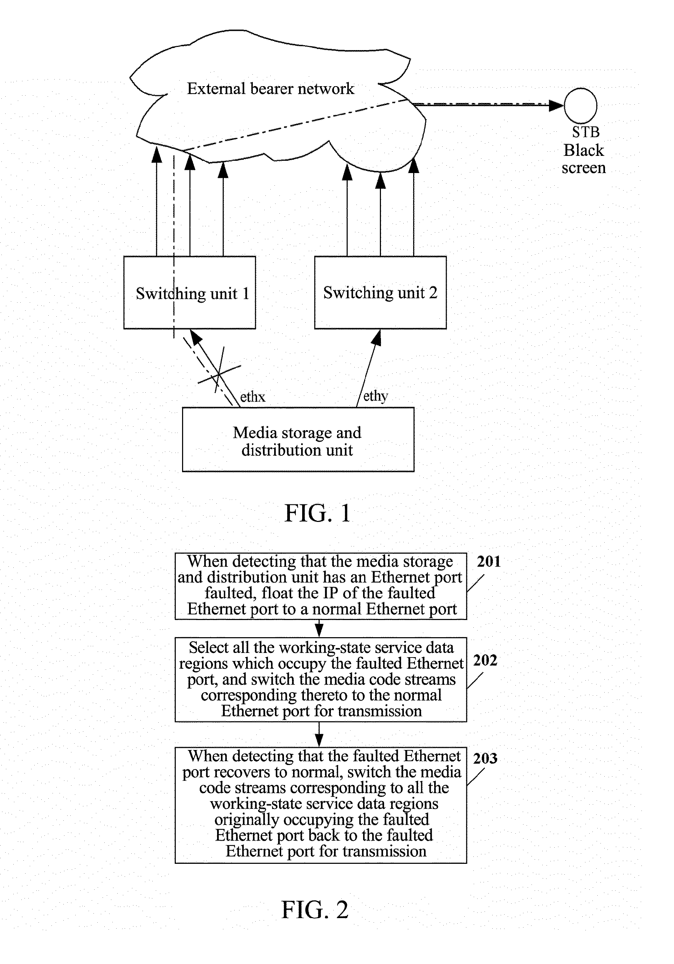

As shown in FIG. 1, FIG. 1 is a schematic diagram of a basic media stream framework in the related IPTV on demand. When the user orders a program via the STB (Set Top Box), the CDN (Content Delivery Network) packs the content of the corresponding film source in the media format via the media storage and distribution unit, and then sends it to the switching unit 1 or 2 through different network port ethx/ethy (whose corresponding ip addresses are ip1 and ip2 respectively, and ip1!= ip2), and then sends it to different set top boxes via an external bearer network.

However, once the Ethernet port (such as ethx) of the media storage and distribution unit fails (for example, it is down), the code streams being watched by the on-demand user of external services on the network port are immediately cut off, the user's STB cannot receive the code streams, thus there occurs the case that the on-demand service has black screen, which affects the user experience and satisfaction.

### Summary of the Invention

In view of the abovementioned analysis, the present invention provides a method for preventing interruption of on-demand service in an Internet Protocol television system, to solve the problem that the code streams are immediately interrupted due to a fault in the Ethernet port in the prior art.

The objective of the present invention is mainly achieved through the following technical solution:
the present invention provides a method for preventing interruption of on-demand service in an Internet Protocol Television (IPTV) system, comprising:
   when detecting that a media storage and distribution unit has an Ethernet port faulted, floating IP address of the faulted Ethernet port over a normal Ethernet port; and
   selecting all working-state service data regions occupying the faulted Ethernet port, switching media code streams corresponding to the selected working state service data regions to the normal Ethernet port for transmission.

The method further comprises:
when detecting that the faulted Ethernet port recovers to normal, switching the media code streams corresponding to all the working-state service data regions which occupied the faulted Ethernet port before the fault back to the faulted Ethernet port for transmission.

The step of switching the media code streams corresponding to all the working-state service data regions which occupied the faulted Ethernet port before the fault back to the faulted Ethernet port again for transmission comprises: when the faulted Ethernet port recovers to normal, traversing all the working-state service data regions currently occupying the normal Ethernet port, and switching the code streams corresponding to the working-state service data regions which originally occupied the faulted Ethernet port back to the faulted Ethernet port for transmission.

The present invention further provides a device for preventing interruption of on-demand service in an Internet Protocol television (IPTV) system, comprising: a monitoring module and a switching module, wherein
the monitoring module is configured to: when detecting that a media storage and distribution unit has an Ethernet port faulted, float IP address of the faulted Ethernet port to a normal Ethernet port, and trigger the switching module;
the switching module is configured to select all the working-state service data regions occupying the faulted Ethernet port, switch the media code streams corresponding to the selected working-state service data regions to the normal Ethernet port for transmission.

The switching module is further configured to: when the monitoring module detects that the faulted Ethernet port recovers to normal, switch the media code streams corresponding to all the working-state service data regions which occupied the faulted Ethernet port before the fault back to the faulted Ethernet port again for transmission.

The switching module is further configured to switch the media code streams corresponding to all the working-state service data regions which occupied the faulted Ethernet port before the fault back to the faulted Ethernet port again for transmission in the following way: traversing all the current working-state service data regions which occupy the normal Ethernet port, and switching the code streams corresponding to the working-state service data regions which originally occupied the faulted Ethernet port back to the faulted Ethernet port for transmission.

The beneficial effects of the present invention are as follows:
the present invention enables the services on the Ethernet port smoothly switching to another Ethernet port when the Ethernet port fails, so as to continuously perform the on-demand service without interruption.

Other features and advantages of the present invention will be set forth in the following description, and some of the advantages will become apparent from the description, or be learned by implementing the present invention. The objectives and other advantages of the present invention may be realized and attained from the structures particularly pointed out in the written description, claims, and accompanying drawings.

### Brief Description of the Drawings

FIG. 1 is a schematic diagram of a basic media stream framework in an IPTV on demand in the related art;
FIG. 2 is a schematic diagram of the process of a method embodiment in the present invention;
FIG. 3 is a schematic diagram of the scene when the multi-user media watches on-demand service from different network ports in the present invention;
FIG. 4 is a schematic diagram of the scene when the network port ethx fails during normal watching of the on-demand service in the present invention;
FIG. 5 is a schematic diagram of the process of implementing a method for preventing the interruption of on-demand service in the IPTV system in the failure scenario in FIG. 4 in the present invention;
FIG. 6 is a schematic diagram of the structure of a device embodiment in the present invention.

### Preferred Embodiments of the Invention

Hereinafter in conjunction with the accompanying drawings, the preferred embodiments of the present invention will be specifically described, wherein the accompanying drawings constitute a part of the present application and are used to explain the principles of the present invention together with the embodiments of the present invention.

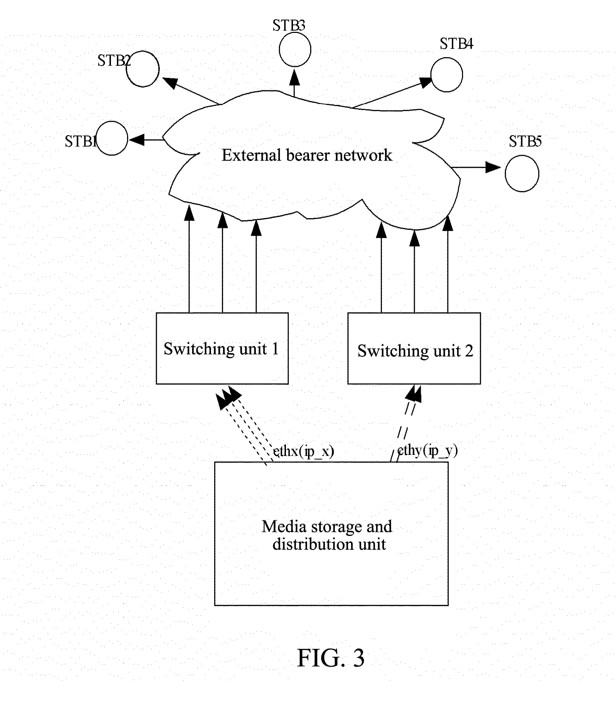

First, in conjunction with FIG. 2 and FIG. 3, the preferred method embodiment of the present invention will be described in detail.

As shown in FIG. 2, FIG. 2 is a schematic diagram of a process of the method embodiment in the present invention, specifically comprising:
step 201: When detecting that the media storage and distribution unit has an Ethernet port faulted, float the IP of the faulted Ethernet port to a normal Ethernet port;
step 202: Select all the working-state service data regions which occupy the faulted Ethernet port, and switch the media code streams corresponding thereto to the normal Ethernet port for transmission;
Step 203: When detecting that the faulted Ethernet port recovers to normal, switch the media code streams corresponding to all the working-state service data regions originally occupying the faulted Ethernet port back to the faulted Ethernet port for transmission.

In order to facilitate the understanding of the present invention, the method in accordance with the embodiment of the present invention will be further described in the following with combination of a specific application scenario.

As shown in FIG. 3, FIG. 3 is a schematic diagram of the scene of a multi-user media watching the on-demand service from different network ports, wherein, the IP address corresponding to the Ethernet port ethx is ip_x, the IP address corresponding to the Ethernet port ethy is ip_y; there are three users on the ip_x, and two users on the ip_y; these five users are all normally watching the on-demand service.

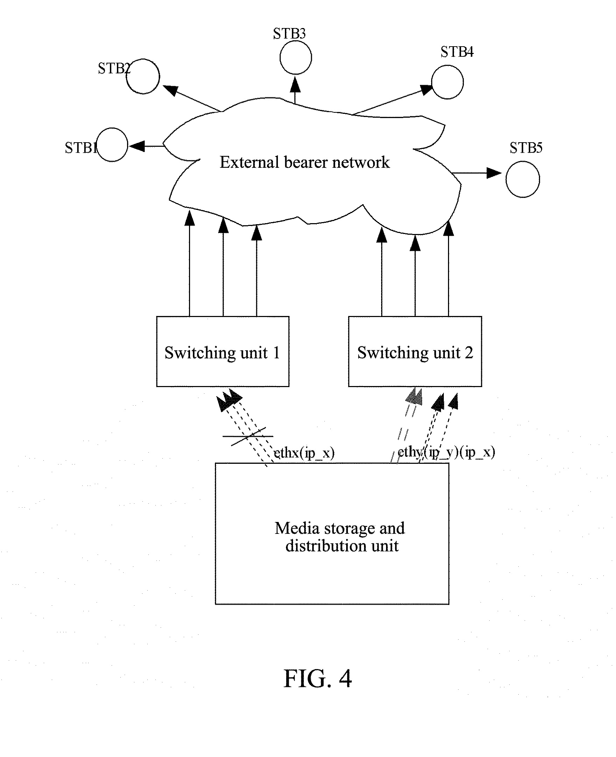

As shown in FIG. 4, FIG. 4 is a schematic diagram of the scene that the network port ethx fails (for example, it is down) when the on-demand service is normally watched.

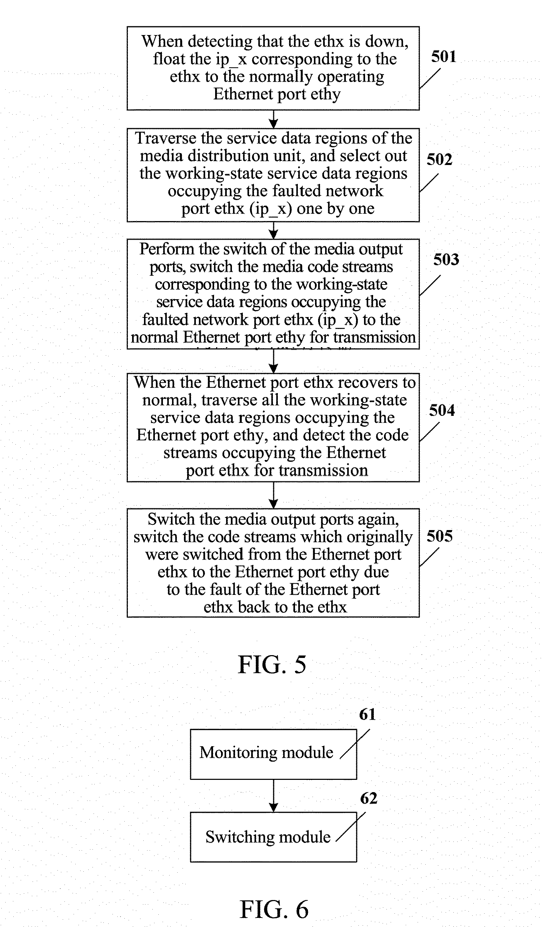

As shown in FIG. 5, FIG. 5 is a schematic diagram of the process of implementing the method for preventing the interruption of on-demand service in the IPTV system in the failure scenario shown in FIG. 4, specifically comprising:
step 501: When detecting that the ethx is down, float the ip_x corresponding to the ethx to a normally operating Ethernet port, such as ethy, at this time, it equals to that two ips, respectively ip_x and ip_y, are configured on the Ethernet port ethy;
step 502: Traverse the service data regions of the media distribution unit, and select out the working-state service data regions occupying the faulted network port ethx (ip_x) one by one;
Step 503: perform the switch of the media outputs, switch the media code streams corresponding to the working-state service data regions occupying the faulted network port ethx (ip_x) to the normal Ethernet port ethy for transmission, therefore, the media code streams can continue sending the media packets via the Ethernet port ethy, so as to achieve a seamless switch of the media streams;
Step 504: When the Ethernet port ethx recovers to normal, for example, switching from the down state back to the up state, it needs to traverse all the working-state service data regions occupying the Ethernet port ethy, detects that some of the working-state service data regions are originally transmitted on the Ethernet port ethx;
Step 505: switch the media output ports again, switch the code streams which were originally switched from the Ethernet port ethx to the Ethernet port ethy due to the fault of the Ethernet port ethx back to the ethx, so that the code streams corresponding to the working-state service data regions which originally occupied the Ethernet port ethx can be re-transmitted via the Ethernet port ethx, thereby maintaining the balance of traffic between the two switching units.

In the following, with combination of FIG. 6, the preferred device embodiment of the present invention will be described in detail.

As shown in FIG. 6, FIG. 6 illustrates a schematic diagram of the structure of the device in accordance with the embodiment of the present invention, specifically comprising: monitoring module 61 and switching module 62, wherein,
the monitoring module 61 is configured to: when detecting that the media storage and distribution unit has an Ethernet port faulted, float the IP address of the faulted Ethernet port to a normal Ethernet port, and trigger the switching module 62;
the switching module 62 is configured to: select all the working-state service data regions which occupy the faulted Ethernet port, switch the media code streams corresponding thereto to a normal Ethernet port for transmission; and, when detecting that the faulted Ethernet port recovers to normal, the monitoring module 61 switches the media code streams corresponding to all the working-state service data regions which occupied the faulted Ethernet port before the fault back to the faulted Ethernet port for transmission; specifically speaking, when the monitoring module 61 finds that the faulted Ethernet port recovers to normal, the switching module 62 traverses all the current working-state service data regions which occupy the normal Ethernet port, and switch the code streams corresponding to the working-state service data regions which originally occupied the faulted Ethernet port back to the faulted Ethernet port for transmission.

It should be noted that, since the specific implementation process of the abovementioned device has been described in detail in the abovementioned method embodiment, it is not repeated here.

In summary, the embodiment of the present invention provides a method and device for preventing interruption of on-demand service in the IPTV system, so that the services on the Ethernet port can be smoothly switched to another Ethernet port when the Ethernet port fails, and the on-demand service can be continuously performed without interruption, and the user will not perceive the network port fault, thereby enhancing the user satisfaction and experience. Moreover, when detecting that the faulted Ethernet port recovers to normal, switch the media code streams corresponding to all the working-state service data regions which occupied the faulted Ethernet port before the fault back to the faulted Ethernet port for transmission, thereby achieving the role of balancing the media streams.

The above description is only preferred embodiments of the present invention, but the protection scope of the present invention is not limited thereto, any person skilled in the art can easily think of changes or alternatives within the technical scope disclosed by the present invention, and these changes and alternatives shall be within the protection scope of the present invention. Accordingly, the protection scope of the present invention should be the protection scope of the claims.

### Industrial Applicability

Compared with the prior art, the present invention can smoothly switch the services on a certain Ethernet port to another Ethernet port when the certain Ethernet port fails, so as to continuously perform the on-demand service without interruption.

## Claims

1. A method for preventing interruption of an on-demand service in an Internet Protocol Television (IPTV) system, comprising:
when detecting that a media storage and distribution unit has an Ethernet port faulted, floating IP address of the faulted Ethernet port to a normal Ethernet port; and
selecting all working-state service data regions occupying the faulted Ethernet port, switching media code streams corresponding to the selected working state service data regions to the normal Ethernet port for transmission.

2. The method of claim 1, further comprising:
when detecting that the faulted Ethernet port recovers to normal, switching the media code streams corresponding to all the working-state service data regions which occupied the faulted Ethernet port before the fault back to the faulted Ethernet port for transmission.

3. The method of claim 2, wherein, the step of switching the media code streams corresponding to all the working-state service data regions which occupied the faulted Ethernet port before the fault back to the faulted Ethernet port for transmission comprises:
when the faulted Ethernet port recovers to normal, traversing all the working-state service data regions currently occupying the normal Ethernet port, and switching the code streams corresponding to the working-state service data regions which originally occupied the faulted Ethernet port back to the faulted Ethernet port for transmission.

4. A device for preventing interruption of an on-demand service in an Internet Protocol television (IPTV) system, comprising: a monitoring module and a switching module, wherein
the monitoring module is configured to: when detecting that a media storage and distribution unit has an Ethernet port faulted, float IP address of the faulted Ethernet port to a normal Ethernet port, and trigger the switching module;
the switching module is configured to select all the working-state service data regions occupying the faulted Ethernet port, switch the media code streams corresponding to the selected working-state service data regions to the normal Ethernet port for transmission.

5. The device of claim 4, wherein, the switching module is further configured to: when the monitoring module detects that the faulted Ethernet port recovers to normal, switch the media code streams corresponding to all the working-state service data regions which occupied the faulted Ethernet port before the fault back to the faulted Ethernet port again for transmission.

6. The device of claim 5, wherein, the switching module is configured to switch the media code streams corresponding to all the working-state service data regions which occupied the faulted Ethernet port before the fault back to the faulted Ethernet port again for transmission in the following way:
traversing all the current working-state service data regions which occupy the normal Ethernet port, and switching the code streams corresponding to the working-state service data regions which originally occupied the faulted Ethernet port back to the faulted Ethernet port for transmission.
